# EUROPEAN PATENT SPECIFICATION

(11) **EP 3 190 092 B1**
(45) Date of publication and mention of the grant of the patent: **08.01.2025**
(21) Application number: 15837989.1
(22) Date of filing: 31.08.2015
(51) Int. Cl.: C02F 1/56, B01D 21/01, C02F 1/52

(54) **AGENT FOR TREATING CIRCULATION WATER IN WET PAINTING BOOTH AND METHOD FOR TREATING CIRCULATION WATER IN WET PAINTING BOOTH**
MITTEL ZUR BEHANDLUNG VON UMLAUFWASSER IN EINER FEUCHTEN LACKIERKABINE UND VERFAHREN ZUR BEHANDLUNG VON UMLAUFWASSER IN EINER FEUCHTEN LACKIERKABINE
AGENT DE TRAITEMENT D'EAU DE CIRCULATION DANS UNE CABINE DE PEINTURE HUMIDE ET PROCÉDÉ DE TRAITEMENT D'EAU DE CIRCULATION DANS UNE CABINE DE PEINTURE HUMIDE

(30) Priority: 04.09.2014 JP 2014180279
(43) Date of publication of application: 12.07.2017
(73) Proprietor: Kurita Water Industries Ltd., Tokyo 164-0001 (JP)
(72) Inventor: ARIMOTO, Yuta, Tokyo 164-0001 (JP); MATSUMOTO, Katsumi, Tokyo 164-0001 (JP); YAMAZAKI, Michiyasu, Takasaki-shi Gunma 370-0032 (JP)
(74) Representative: Hoffmann Eitle
(86) International application number: PCT/JP2015/074632
(87) International publication number: WO 2016/035743

(56) References cited:
- JP-A- 2011 194 306
- JP-A- 2012 210 613
- JP-A- 2012 210 613
- JP-A- 2014 124 612
- JP-A- 2014 124 612
- JP-A- 2014 155 916
- JP-A- H0 370 780
- US-A- 5 843 337

## Description

### Field of Invention

The present invention relates to a method for treating water circulating through a wet paint booth that enable a water-based paint and/or a solvent-based paint included in water circulating through a wet paint booth to be coagulated with efficiency.

### Background of Invention

Spray painting is performed in a process of painting automobiles, electrical apparatuses, metal products, and the like. Spray painting produces a large amount of overspray paint (excess paint), which is not deposited on a material that is to be painted. An amount of the excess paint produced in such a painting process is about 50% to 60% of the amount of the paint used, except when electrostatic painting, which offers a high painting efficiency, is employed. Accordingly, it is necessary to remove and collect excess paint from the painting process. Wet paint booths, in which excess paint is collected with water, that is, water is used for cleaning, are commonly employed in paint facilities. Examples of the paint booths include a shower paint booth, a no-pump paint booth, a water-curtain paint booth, a Venturi paint booth, and a hydrospin paint booth. The paint booths are basically constituted by a spray chamber, an air-intake apparatus, an exhaust system (a duct), and a water circulation system.

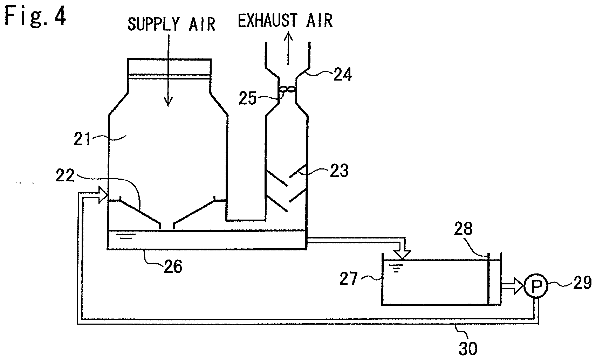

A treatment for water circulating through a wet paint booth is outlined below with reference to Fig. 4, which is a diagram illustrating a Venturi booth. While part of a mist of excess paint formed in a spray chamber 21 adheres to the walls of the chamber and a duckboard used as a working floor, most of the excess paint is carried by a flow of air, comes into contact with the circulating water flowing along a water curtain plate 22, and is collected in the water. Water droplets and some paint particles that remain in the air are removed by an eliminator 23, and the air is subsequently exhausted through an exhaust duct 24 to the outside of the system with a fan 25. The circulating water that includes the paint particles is fed into a pit (separation tank) 27 through a water tank 26 and subsequently subjected to solid-liquid separation with a flotation apparatus or the like (not illustrated in the drawing). Solids produced by the solid-liquid separation are collected as paint sludge. Water from which the solids have been separated and removed passes through a strainer 28 and is returned through a circulating water line by a circulating water pump 29 to be reused as cleaning water.

Paints are divided into two categories: solvent-based paints that include only an organic solvent such as a thinner; and water-based paints that include water as a solvent. Solvent-based paints have higher weather resistance and chipping resistance than water-based paints and have been widely used particularly for automotive top clear coating. Water-based paints, which include water used as a solvent (although some water-based paints further include a solvent other than water), are advantageous in that they are non-flammable, safe, and sanitary and, for example, have no risk of causing pollution due to organic solvents. Therefore, the number of fields in which water-based paints are used has been increasing.

In the case where a solvent-based paint is used, the particles of the excess paint mixed in the circulating water may adhere to facilities and significantly contaminate the facilities because of their high adhesion. Furthermore, the paint particles may coagulate into large clumps, which cause clogging.

In the case where a water-based paint is used, foaming may disadvantageously occur. Since water-based paints are intrinsically soluble in water or capable of uniformly dispersing in water, the paint component accumulates and concentrates in the circulating water in proportion to the amount of the paint used. The concentration of the paint component results in the concentration of foamable substances, such as a surfactant, included in the paint, which results in the generation of bubbles. Furthermore, increases in the concentration of suspended substances in the circulating water and the viscosity of the circulating water stabilize the bubbles and cause intensive foaming. This may result in failure to operate the paint booth with consistency.

Examples of the agents that have been used for treating water circulating through a wet paint booth include those described in 1 to 3 below.
1. Treatment agent that includes a melamine resin (Patent Literature 1)
2. Combined use of an inorganic coagulant and a high-molecular polymer (Patent Literature 2)
3. Treatment agent that includes clay mineral

The above treatment agents are capable of somewhat reducing the adhesion of solvent-based paints, but also have the following disadvantages.

The above treatment agents are not capable of reducing the foaming of a water-based paint. Accordingly, an anti-foaming agent is commonly used in combination with the above treatment agent in order to reduce the foaming of a water-based paint. However, using an anti-foaming agent may increase the COD of water circulating through a wet paint booth, that is, degrade the quality of the circulating water.

Moreover, the above treatment agents are not capable of removing a surfactant, which is responsible for the foaming of a water-based paint. Thus, in a system including a paint booth, in which water is circulated and concentrated, the amount of bubbles may be increased gradually, and the amount of anti-foaming agent used may be increased accordingly. This further degrades the quality of the circulating water in a vicious cycle.

The above treatment agents are not capable of reducing the adhesion of solvent-based paints by a sufficient degree. For achieving an intended effect, it is necessary to increase the amount of treatment agent used. However, an increase in the amount of treatment agent used leads to an increase in the amount of waste.

As a treatment agent capable of reducing the foaming of water-based paints, treatment agents that include a phenolic resin have been proposed, for example, in Patent Literatures 3 and 4.

It is described in Patent Literature 3 that the phenolic resin is preferably, for example, a novolac-type phenolic resin having a molecular weight of 1,000 or less (number of repetition, n: 10 or less) or a resole-type phenolic resin having a molecular weight of 100 to 300. The phenolic resin used in Patent Literature 4 is a novolac-type phenolic resin having a further smaller molecular weight than the phenolic resin used in Patent Literature 3 with the number of repetition, n, being 4 to 8.

The use of a phenolic resin is described also in Patent Literature 5. It is described in Patent Literature 5 that the weight-average molecular weight of the phenolic resin is 3,000 or less and is preferably 2,000 or less.
Patent Literature 1: JP H6-2259 B
Patent Literature 2: JP S52-71538 A
Patent Literature 3: Japanese Patent 4069799
Patent Literature 4: Japanese Patent 4717837
Patent Literature 5: JP 2011-72866 A

The above agents for treating water circulating through a wet paint booth proposed in the related art, which include a phenolic resin, have the following disadvantages.

The above treatment agents are capable of somewhat reducing the foaming of water-based paints, but such a reduction is not sufficient. Thus, for achieving the intended effects, it is necessary to increase the amount of treatment agent used.

Moreover, although the above treatment agents are capable of markedly reducing the adhesion of solvent-based paints, the amount of treatment agent required for reducing the adhesion of a solvent-based paint may need to be increased depending on the type of the paint, the type of the curing agent used, and the facility conditions. JP 2011194306 relates to flocculation of paint in water circulating through a wet paint booth. A coagulation agent comprising novolak in combination with a cationic polymer is disclosed, as well as in general the use of e.g. aluminium sulfate as inorganic coagulant. The coagulation agent is used in an amount of 5-200 mg/ L of total active ingredient, thus novolak as well as cationic polymer together have to fall within this range.

### Summary of Invention

An object of the present invention is to provide a method for treating water circulating through a wet paint booth in which an agent for treating water circulating through a wet paint booth is used, the agent being capable of reducing the adhesion of a solvent-based paint and coagulating a solvent-based paint to a sufficient degree regardless of the type of the paint, the type of the curing agent used, or the facility conditions, the agent also being capable of markedly reducing the foaming of a water-based paint, even when being used in a small amount.

The inventor of the present invention found that the above issues may be addressed by using a phenolic resin having a larger polystyrene-equivalent weight-average molecular weight (hereinafter, may be referred to as "weight-average molecular weight") than the phenolic resins used in the related art.

The present invention is directed to amethod for treating circulating water circulating through a wet paint booth,
the method comprising coagulating the water-based paint and/or a solvent-based paint included in the circulating water by adding an agent to the circulating water,
wherein said agent comprises a phenolic resin having a weight-average molecular weight of 5,000 to 100,000, the phenolic resin serving as an active component,
wherein the phenolic resin is dissolved in an aqueous alkaline solution,
wherein the phenolic resin is at least one selected from the group consisting of a novolac-type phenolic resin and a secondary-reaction phenolic resin,
wherein said secondary reaction phenolic resin is produced by adding an aldehyde to an aqueous alkaline solution of a novolac-type phenolic resin produced by a reaction of a phenol with an aldehyde in the presence of an acid catalyst and subsequently conducting a resole-type secondary reaction in the presence of an alkali catalyst,
wherein said agent is added to the circulating water such that an amount of the phenolic resin is 1 to 200 mg/L,
wherein an aluminum-based coagulant and/or a cationic polymer is further added to the circulating water,
wherein the phenolic resin when added to water circulating through a wet paint booth dissolves in the circulating water or disperses in the circulating water to form colloidal particles, and
wherein the dissolved or dispersed phenolic resin particles are coagulated and insolubilized due to the contribution of the cationic polymer and the aluminum-based coagulant that are included in the circulating water together with the phenolic resin.

Further embodiment of the present invention are described below and in the appended claims.

### Advantageous Effects of Invention

According to the present invention, it is possible to reduce the adhesion of a solvent-based paint and coagulate a solvent-based paint to a sufficient degree regardless of the type of the paint used, the type of the curing agent used, or the facility conditions even when being used in a small amount. It is also possible to markedly reduce the foaming of a water-based paint. According to the present invention, the amounts of chemicals used may be reduced. This enables the cost of chemicals to be reduced and also leads to a reduction in the amount of coagulated and dewatered sludge that is to be disposed of. As a result, the cost of waste treatment may also be reduced.

### Brief Description of Drawings

Fig. 1 is a graph illustrating the results of the evaluations of foaming ability made in Examples 1 to 6 and Comparative Examples 1 to 5.
Fig. 2 is a graph illustrating the results of the evaluations of defoaming ability made in Examples 1 to 6 and Comparative Examples 1 to 5.
Fig. 3 is a diagram schematically illustrating a testing system used in Examples 10 to 12 and Comparative Examples 9 to 11.
Fig. 4 is a diagram illustrating a Venturi booth.

### Description of Embodiments

An embodiment of the present invention is described below in detail.

### [Phenolic Resin]

An agent for treating water circulating through a wet paint booth used in the method according to the present invention includes a phenolic resin having a weight-average molecular weight of more than 5,000 and 100,000 or less, the phenolic resin serving as an active component.

In the present invention, the weight-average molecular weight of a phenolic resin is determined by GPC (gel permeation chromatography) with a calibration curve prepared using standard polystyrene samples. Specifically, the following method is employed.

### <Method for Determining Weight-Average Molecular Weight>

### <<Preparation of Specimen Used in Measurement of Weight-Average Molecular Weight>>

A specimen soluble in tetrahydrofuran is directly used in the measurement of weight-average molecular weight. A specimen that is not soluble in tetrahydrofuran is subjected to the operation described below in order to prepare a specimen used in the measurement of weight-average molecular weight.

A specimen dissolved in an aqueous alkaline solution is insoluble in tetrahydrofuran. Thus, it is necessary to remove alkali metal ions and moisture without discharging the low-molecular-weight component of the resin.

Accordingly, the aqueous alkaline solution of the specimen is diluted to about 0.1% by mass. Hydrochloric acid is gradually added dropwise to the diluted solution in order to reduce pH. Thus, a suspension having a pH of 4.6 is prepared. After the suspension has been charged into a dialysis tube, the tube is hermetically sealed, placed in a vat through which pure water can be passed continuously, and subjected to dialysis for 24 hours. Subsequently, the suspension is removed from the dialysis tube and filtered through a glass filter in order to collect a resin. The resin is cleaned with pure water and subsequently dried at room temperature for 48 hours with a vacuum drier. Thus, a specimen used in the measurement of weight-average molecular weight is prepared.

### <<Measurement of Weight-Average Molecular Weight>>

A tetrahydrofuran solution is prepared using the specimen used in the measurement of weight-average molecular weight. In the measurement, HLC-8120GPC produced by Tosoh Corporation is used as an analyzing apparatus (GPC), and tetrahydrofuran is used as a solvent. The weight-average molecular weight is determined in terms of standard polystyrene.

If the weight-average molecular weight of the phenolic resin is 3,000 or less, the advantageous effects of the present invention, which result from the use of a phenolic resin having a large weight-average molecular weight, may fail to be achieved to a sufficient degree.

When the phenolic resin is added to water circulating through a wet paint booth, it dissolves in the circulating water or disperses in the circulating water to form colloidal particles. The dissolved or dispersed phenolic resin particles are coagulated and insolubilized due to the contribution of the cationic polymer and the aluminum-based coagulant that are included in the circulating water together with the phenolic resin, a reduction in the pH of the circulating water, and the like. The coagulated and insolubilized phenolic resin particles are capable of reducing the adhesion of a solvent-based paint and the foaming of a water-based paint. It is considered that the larger the weight-average molecular weight of the phenolic resin, the greater the above advantageous effects. This is presumably because, when a phenolic resin having a large weight-average molecular weight is insolubilized, the paint particles are taken into the inside of the coagulated resin particles.

If the weight-average molecular weight of the phenolic resin is excessively large, the viscosity of the aqueous alkaline solution of the phenolic resin, which is described below, is increased. This increases the likelihood of the aqueous alkaline solution being gelated or solidified. As a result, the concentration of the resin needs to be reduced. When the concentration of the resin is low, the amount of aqueous alkaline solution of the phenolic resin used is disadvantageously increased.

For the above reasons, the weight-average molecular weight of the phenolic resin is 5,000 to 100,000 or less. It is preferable to use a phenolic resin having a weight-average molecular weight of 5,000 to 30,000.

The phenolic resin is a novolac-type phenolic resin and/or a secondary-reaction phenolic resin produced by a secondary reaction in which a novolac-type phenolic resin is used as a raw-material resin. The above phenolic resins may be used alone or in combination of two or more.

The phenolic resin produced by the secondary reaction is a resin produced by adding an aldehyde to an aqueous alkaline solution of a novolac-type phenolic resin produced by a reaction of a phenol with an aldehyde in the presence of an acid catalyst and subsequently conducting a resole-type secondary reaction in the presence of an alkali catalyst. The content of the low-molecular-weight component in the phenolic resin is reduced, while the molecular weight of the phenolic resin is controlled to be large (see, e.g., Japanese Patent 5407994).

Examples of the phenol used for producing the novolac-type phenolic resin include, but are not limited to, phenol; isomers of cresol; isomers of ethylphenol; isomers of xylenol; alkylphenols such as butylphenol; unsaturated alkylphenols such as cardanol; polycyclic aromatic phenols such as α-naphthol and β-naphthol; polyhydric phenols such as bisphenol A, bisphenol F, bisphenol S, pyrogallol, resorcin, and catechol; and hydroquinone. The above phenols may be used alone or in a mixture of two or more.

Examples of the aldehyde used for producing the novolac-type phenolic resin and the secondary-reaction phenolic resin include, but are not limited to, formaldehyde, paraformaldehyde, acetaldehyde, propyl aldehyde, benzaldehyde, salicylaldehyde, and glyoxal. The above aldehydes may be used alone or in a mixture of two or more.

Since phenolic resins are poorly soluble in water, the phenolic resin is preferably used in the form of a solution or an emulsion by being dissolved or dispersed in a solvent soluble in water. Examples of such a solvent include water-soluble organic solvents such as ketones (e.g., acetone), esters (e.g., methyl acetate), and alcohols (e.g., methanol); aqueous alkaline solutions; and amine solutions. It is preferable to use aqueous alkaline solutions such as an aqueous sodium hydroxide (NaOH) solution and an aqueous potassium hydroxide (KOH) solution.

When the phenolic resin is used in the form of an aqueous alkaline solution, the concentration of an alkali in the aqueous alkaline solution is preferably 1% to 25% by mass, and the concentration of the phenolic resin in the aqueous alkaline solution is preferably 1% to 50% by mass. In the preparation of the aqueous alkaline solution of the novolac-type phenolic resin, when the concentration of the phenolic resin is high, the aqueous alkaline solution may be heated to about 70°C to 80°C in order to dissolve the novolac-type phenolic resin.

The amount of phenolic resin added to water circulating through a wet paint booth varies depending on the properties of the circulating water, that is, for example, the type and content of a paint included in the circulating water, and is as follows. The amount of phenolic resin added to water circulating through a wet paint booth is 1 mg/L or more and is preferably 5 mg/L or more relative to the amount of circulating water in terms of the content of the active component (resin solid content). The amount of phenolic resin added to the circulating water is preferably 0.1% by mass or more and is particularly preferably 0.5% by mass or more of the amount (solid content) of paint included in the circulating water in terms of the content of the active component.

If the proportion of the amount of phenolic resin used is lower than the above proportion, the coagulation effect, the adhesion-reduction effect, and the anti-foaming effect may fail to be achieved at a sufficient level. Using an excessively large amount of phenolic resin does not always increase the above advantageous effects in accordance with the amount of phenolic resin used. Using an excessively large amount of phenolic resin also results in failure to achieve an object of the present invention, which is to reduce the amounts of chemicals used by using a phenolic resin having a large weight-average molecular weight. Thus, the amount of phenolic resin added to water circulating through a wet paint booth is 1 to 200 mg/L, and is preferably 5 to 200 mg/L relative to the amount of circulating water in terms of the content of the active component. The amount of phenolic resin added to the circulating water is preferably 100% by mass or less and is particularly preferably 0.5% to 10% by mass of the amount of paint included in the circulating water in terms of the content of the active component.

### <Aluminum-Based Coagulant and Cationic Polymer>

The above-described phenolic resin is used in combination with an aluminum-based coagulant and/or a cationic polymer. Using the phenolic resin in combination with an aluminum-based coagulant and/or a cationic polymer may further increase the coagulation effect, the adhesion-reduction effect, and the anti-foaming effect.

Examples of the aluminum-based coagulant include aluminum sulfate, polyaluminum chloride, and aluminum nitrate. The above aluminum-based coagulants may be used alone or in combination of two or more.

Examples of the cationic polymer include, but are not limited to, "organic coagulants" having a weight-average molecular weight of 1,000 to 1 million and preferably 5,000 to 300 thousand, such as alkylamine-epichlorohydrin condensate, polyethyleneimine, alkylene dichloride-polyalkylene polyamine condensate, dicyandiamide-formaldehyde condensate, a homopolymer of a cationic monomer such as DAM (dimethylaminoethyl methacrylate) or DADMAC (diallyldimethylammonium chloride), and a copolymer of a cationic monomer such as DAM or DADMAC with a nonionic monomer such as acrylamide.

The above cationic polymers may be used alone or in a mixture of two or more.

In the case where the phenolic resin is used in combination with the aluminum-based coagulant, the amount of aluminum-based coagulant added to water circulating through a wet paint booth varies depending on, for example, the properties of the circulating water, the type and amount of phenolic resin added to the circulating water, and whether or not the cationic polymer is used. The amount of aluminum-based coagulant added to water circulating through a wet paint booth is preferably about 1 to 1,000 mg/L, is particularly preferably about 1 to 200 mg/L, and is further preferably about 5 to 200 mg/L relative to the amount of circulating water in terms of the content of the active component.

If the amount of aluminum-based coagulant used falls below the above lower limit, the coagulation effect, the adhesion-reduction effect, and the anti-foaming effect may fail to be increased by a sufficient degree by the addition of the aluminum-based coagulant. Using the aluminum-based coagulant in an amount exceeding the above upper limit does not increase the above advantageous effects in accordance with the amount of aluminum-based coagulant used, but disadvantageously increases the cost of chemicals, the amount of coagulated sludge generated, and the like.

In the case where the phenolic resin is used in combination with the cationic polymer, the amount of cationic polymer added to water circulating through a wet paint booth varies depending on, for example, the properties of the circulating water, the type and amount of phenolic resin added to the circulating water, and whether or not the aluminum-based coagulant is used. The amount of cationic polymer added to water circulating through a wet paint booth is preferably about 5 to 100 mg/L, is particularly preferably about 5 to 50 mg/L, and is further preferably about 10 to 30 mg/L relative to the amount of circulating water in terms of the content of the active component.

If the amount of cationic polymer used falls below the above lower limit, the coagulation effect, the adhesion-reduction effect, and the anti-foaming effect may fail to be increased by a sufficient degree by the addition of the cationic polymer. Using the cationic polymer in an amount exceeding the above upper limit does not increase the above advantageous effects in accordance with the amount of cationic polymer used. Furthermore, adding an excessively large amount of cationic polymer to the circulating water causes particles to electrically repel one another due to the excess cations. This leads to insufficient coagulation. In addition, for example, the cost of chemicals and the amount of coagulated sludge generated are disadvantageously increased.

### <Method for Treating Water Circulating through Wet Paint Booth>

A method for adding the agent for treating water circulating through a wet paint booth according to the present invention, that is, the phenolic resin and the aluminum-based coagulant and/or the cationic polymer to water circulating through a wet paint booth is not limited. The above agents may be added to the water circulation system intermittently about once or twice every day or continuously. The agents are preferably added continuously to the water circulation system with a pump in a specific amount.

The position at which the agent for treating water circulating through a wet paint booth used in the method according to the present invention is added to the circulating water is not limited. The agent may be added to the circulating water at any position. Normally, the agent for treating water circulating through a wet paint booth used in the method according to the present invention is added to the circulating water on the entry side of a separation tank to which the circulating water is returned. The order of adding the phenolic resin and the aluminum-based coagulant and/or the cationic polymer to the circulating water is not limited. The phenolic resin and the aluminum-based coagulant and/or the cationic polymer may be added at the same time at the same position. In the case where the separation of coagulated sludge is performed using a floatation separation apparatus or a centrifugal separation apparatus, the cationic polymer may be added to the circulating water at a position upstream of the separation apparatus.

The pH of the coagulation treatment system is preferably about 6.0 to 8.5 in order to prevent the corrosion of facilities and in consideration of the advantageous effects of the phenolic resin and the cationic polymer which vary with pH. Accordingly, if the pH of the coagulation treatment system deviates below the above range, an aqueous alkaline solution is preferably added to the coagulation treatment system in order to adjust the pH of the coagulation treatment system. Although the pH of an actual coagulation treatment system does not deviate toward the high-pH region in normal cases, if it significantly deviates from the above range, the pH of the coagulation treatment system may need to be adjusted.

Upon the phenolic resin and the aluminum-based coagulant and/or the cationic polymer being added to the circulating water, a paint included in the circulating water is immediately insolubilized and coagulated to form flocs. The flocs generated by coagulation may be separated and collected by, for example, flotation separation, wedge wire screening, rotary screening, bar screening, cyclone separation, or a method in which a centrifugal separating apparatus, a filtering apparatus, or the like is used.

The coagulated sludge separated and collected by the above method is dewatered by gravity drainage or an ordinary method and subsequently disposed of by incineration and landfill. According to the present invention, the use of a phenolic resin having a large weight-average molecular weight reduces the amounts of chemicals required. This also reduces the amount of sludge generated and the cost of the disposal of the sludge.

Subsequent to the coagulation treatment performed using the agent for treating water circulating through a wet paint booth in the method according to the present invention, a polymer coagulant including a water-soluble polymer having a weight-average molecular weight of normally more than 1 million and preferably 5 million or more may be further added to the circulating water in order to increase the size of the flocs.

Examples of the polymer coagulant include publicly known anionic polymer coagulants, cationic polymer coagulants, and zwitterionic polymer coagulants. The above polymer coagulants may be used alone or in combination of two or more.

In the case where the polymer coagulant is used, the amount of polymer coagulant added to the circulating water may be determined appropriately so as to be 0.1% to 10% by mass and preferably 0.5% to 2% by mass of the amount of excess paint such that a suitable coagulation effect is achieved.

The agent for treating water circulating through a wet paint booth used in the method according to the present invention and the method for treating water circulating through a wet paint booth can be used, with effect, for treating water circulating through a wet paint booth which includes a water-based paint, water circulating through a wet paint booth which includes a solvent-based paint, and water circulating through a wet paint booth which includes a water-based paint and a solvent-based paint.

### EXAMPLES

The present invention is described more specifically with reference to Examples below. However, the present invention is not limited by Examples below.

### 1. Preparation of Phenolic Resins

### [Sample 1]

"RESITOP PSM-4261" produced by Gun Ei Chemical Industry Co., Ltd. was used. This product is a novolac-type phenolic resin produced by the polycondensation of phenol with formaldehyde in the presence of an acid catalyst and has a weight-average molecular weight of 1,000.

### [Sample 2]

"RESITOP PSM-4324" produced by Gun Ei Chemical Industry Co., Ltd. was used. This product is a novolac-type phenolic resin produced by the polycondensation of phenol with formaldehyde in the presence of an acid catalyst and has a weight-average molecular weight of 2,000.

### [Sample 3]

Into a separable flask equipped with a stirrer, a thermometer, and a reflux condenser, 450.0 g of cresol was charged. To the flask, 200.0 g of a 37-mass% aqueous formaldehyde solution was added. Subsequently, 3.0 g of oxalic acid used as a catalyst was added to the flask. Heating was performed to 95°C with a heater while the system was stirred. While the temperature was maintained at 95°C, a reaction was conducted for 4 hours. Then, dewatering concentration was performed while the temperature was increased to 200°C under normal pressure. When the temperature reached 200°C, unreacted cresol was distilled away under a reduced pressure of 5.3 kPa. Thus, 350 g of a yellow, transparent novolac-type cresol resin (weight-average molecular weight: 2,300) was prepared.

### [Sample 4]

Into a separable flask equipped with a stirrer, a thermometer, and a reflux condenser, 370.4 g of phenol was charged. To the flask, 190.0 g of a 50-mass% aqueous formaldehyde solution was added. Subsequently, 2.0 g of oxalic acid used as a catalyst was added to the flask. Heating was performed to 95°C with a heater while the system was stirred. While the temperature was maintained at 95°C, a reaction was conducted for 4 hours. Then, dewatering concentration was performed while the temperature was increased to 200°C under normal pressure. When the temperature reached 200°C, unreacted phenol was distilled away under a reduced pressure of 5.3 kPa. Thus, 360 g of a yellow novolac-type phenolic resin (weight-average molecular weight: 3,300) was prepared.

### [Sample 5]

"RESITOP PSM-4326" produced by Gun Ei Chemical Industry Co., Ltd. was used. This product is a novolac-type phenolic resin produced by the polycondensation of phenol with formaldehyde in the presence of an acid catalyst and has a weight-average molecular weight of 5,000.

### [Sample 6]

Into a separable flask equipped with a stirrer, a thermometer, and a reflux condenser, 450.0 g of phenol was charged. To the flask, 285.0 g of a 42-mass% aqueous formaldehyde solution was added. Subsequently, 2.5 g of oxalic acid used as a catalyst was added to the flask. Heating was performed to 95°C with a heater while the system was stirred. While the temperature was maintained at 95°C, a reaction was conducted for 4 hours. Then, dewatering concentration was performed while the temperature was increased to 200°C under normal pressure. When the temperature reached 200°C, unreacted phenol was distilled away under a reduced pressure of 5.3 kPa. Thus, 380 g of a yellow novolac-type phenolic resin (weight-average molecular weight: 7,900) was prepared.

### [Sample 7]

"RESITOP PSF-2803" produced by Gun Ei Chemical Industry Co., Ltd. was used. This product is a novolac-type cresol resin produced by the polycondensation of cresol with formaldehyde in the presence of an acid catalyst and has a weight-average molecular weight of 12,000.

### [Sample 8]

"RESITOP PSM-6358" produced by Gun Ei Chemical Industry Co., Ltd. was used as a raw-material resin. This product is a novolac-type phenolic resin produced by the polycondensation of phenol with formaldehyde in the presence of an acid catalyst and has a weight-average molecular weight of 5,400.

Into a beaker, 41.0 g of "PSM-6358", 146.2 g of ion-exchange water, and 12.8 g of a 48-mass% aqueous sodium hydroxide solution were charged. The resulting mixture was stirred with a magnetic stirrer so as to form a solution. Thus, 200 g of an aqueous alkaline solution of a novolac-type phenolic resin which included 20.5% by mass of "PSM-6358" was prepared.

Into a stoppered Erlenmeyer flask, 100.0 g of the aqueous alkaline solution prepared above was charged. After heating was performed to about 60°C, 4.43 g of a 37-mass% aqueous formaldehyde solution was added to the flask. Then, a condenser, a tube through which a nitrogen gas was to be blown into the flask for performing stirring, and a thermometer were attached to the stopper. The flask was placed in an oil bath for 8 hours at a liquid temperature of 85°C in order to perform a resole-type formaldehyde-addition-condensation polymerization reaction (resole-type secondary reaction). Subsequently, the flask was cooled, and 4.46 g of ion-exchange water (for adjusting concentration) was added to the flask. Thus, an aqueous alkaline solution of a secondary-reaction phenolic resin was prepared. The concentration of the resin component (active component) in the aqueous alkaline solution was 19.4% by mass. The weight-average molecular weight of the secondary-reaction phenolic resin was 30,000.

### [Sample 9]

Into a separable flask equipped with a stirrer, a thermometer, and a reflux condenser, 550.0 g of phenol was charged. To the flask, 298.0 g of a 50-mass% aqueous formaldehyde solution was added. Subsequently, 6.0 g of oxalic acid used as a catalyst was added to the flask. Heating was performed to 95°C with a heater while the system was stirred. While the temperature was maintained at 95°C, a reaction was conducted for 3 hours. Then, dewatering concentration was performed while the temperature was increased to 200°C under normal pressure. When the temperature reached 200°C, unreacted phenol was distilled away under a reduced pressure of 5.3 kPa. Thus, 580 g of a yellow novolac-type phenolic resin (weight-average molecular weight: 15,000) was prepared.

Into a beaker, 41.0 g of the above novolac-type phenolic resin, 146.2 g of ion-exchange water, and 12.8 g of a 48-mass% aqueous sodium hydroxide solution were charged. The resulting mixture was stirred with a magnetic stirrer so as to form a solution. Thus, 200 g of an aqueous alkaline solution of a novolac-type phenolic resin which included 20.5% by mass of the above novolac-type phenolic resin was prepared.

Into a stoppered Erlenmeyer flask, 100.0 g of the aqueous alkaline solution prepared above was charged. After heating was performed to about 60°C, 3.50 g of a 50-mass% aqueous formaldehyde solution was added to the flask. Then, a condenser, a tube through which a nitrogen gas was to be blown into the flask for performing stirring, and a thermometer were attached to the stopper. The flask was placed in an oil bath for 8 hours at a liquid temperature of 85°C in order to perform a resole-type formaldehyde-addition-condensation polymerization reaction (resole-type secondary reaction). Subsequently, the flask was cooled, and 4.46 g of ion-exchange water (for adjusting concentration) was added to the flask. Thus, an aqueous alkaline solution of a secondary-reaction phenolic resin was prepared. The concentration of the resin component (active component) in the aqueous alkaline solution was 19.7% by mass. The weight-average molecular weight of the secondary-reaction phenolic resin was 82,704.

### [Sample 10]

Into a separable flask equipped with a stirrer, a thermometer, and a reflux condenser, 470.6 g of phenol was charged. To the flask, 81.6 g of 92-mass% paraformaldehyde was added. To the flask, 4.7 g of zinc acetate used as a catalyst was further added. Subsequently, heating was performed to 120°C with a heater while the system was stirred, and a reaction was conducted for 4 hours under reflux. Then, dewatering concentration was performed while the temperature was increased to 200°C under normal pressure. When the temperature reached 200°C, unreacted phenol was distilled away under a reduced pressure of 5.3 kPa. Thus, 350 g of a yellow high-ortho-type phenolic resin (weight-average molecular weight: 1,100) was prepared.

### [Sample 11]

Into a separable flask equipped with a stirrer, a thermometer, and a reflux condenser, 470.6 g of phenol was charged. To the flask, 97.9 g of 92-mass% paraformaldehyde was added. To the flask, 4.7 g of zinc acetate used as a catalyst was further added. Subsequently, heating was performed to 120°C with a heater while the system was stirred, and a reaction was conducted for 4 hours under reflux. Then, dewatering concentration was performed while the temperature was increased to 200°C under normal pressure. When the temperature reached 200°C, unreacted phenol was distilled away under a reduced pressure of 5.3 kPa. Thus, 370 g of a yellow high-ortho-type phenolic resin (weight-average molecular weight: 1,800) was prepared.

### 2. Evaluations of Foaming Ability and Defoaming Ability

### [Reference Example 1, Examples 2 to 6 and Comparative Examples 1 to 5]

Evaluations of foaming ability and defoaming ability were made using the phenolic resin shown in Table 1 in the following manner.

**[Table 1]**

| Name of sample | Weight-average molecular weight | Name of compound |
|---|---|---|
| Sample 1 | 1,000 | Novolac-type phenol-formaldehyde polycondensate |
| Sample 2 | 2,000 | Novolac-type phenol-formaldehyde polycondensate |
| Sample 3 | 2,300 | Novolac-type cresol-formaldehyde polycondensate |
| Sample 4 | 3,300 | Novolac-type phenol-formaldehyde polycondensate |
| Sample 5 | 5,000 | Novolac-type phenol-formaldehyde polycondensate |
| Sample 6 | 7,900 | Novolac-type phenol-formaldehyde polycondensate |
| Sample 7 | 12,000 | Novolac-type cresol-formaldehyde polycondensate |
| Sample 8 | 30,000 | Resole-type secondary reaction product of novolac-type phenol-formaldehyde polycondensate |
| Sample 9 | 82,704 | Resole-type secondary reaction product of novolac-type phenol-formaldehyde polycondensate |
| Sample 10 | 1,100 | High-ortho-novolac-type phenol-formaldehyde polycondensate |
| Sample 11 | 1,800 | High-ortho-novolac-type phenol-formaldehyde polycondensate |

| | | |
|---|---|---|
| (1) To 400 ml of tap water of Nogi-machi, Tochigi, Japan, 2 ml of a paint (water-based paint for automotive bodies: silver) was added. The resulting mixture was stirred to form a paint liquid. (2) As a treatment agent, an aqueous alkaline solution of the phenolic resin was prepared using sodium hydroxide and pure water. The concentrations of the phenolic resin and sodium hydroxide in the aqueous alkaline solution were 10% and 4.8% by mass, respectively. (3) The treatment agent prepared in (2) was added to the paint liquid prepared in (1) such that the amount of phenolic resin added to the paint liquid was 125, 250, and 500 mg/L. To each of the resulting liquids, 1,000 mg/L of aluminum sulfate was added. The pH values of the liquids were adjusted to about 7.0 by the addition of sodium hydroxide. Thus, water samples were prepared. (4) Subsequently, 300 ml of each of the water samples was charged into a 1-liter graduated cylinder and subjected to a bubbling test. | | |

In the bubbling test, air was blown into the water sample contained in each graduated cylinder at a rate of 1.5 L/min with a spherical air stone in order to bubble the water sample, and the foaming ability and the defoaming ability were determined in the following manner. The test of foaming ability and the test of defoaming ability were sequentially conducted using the same water sample.

### <Foaming Ability>

After two minutes from the time of starting the bubbling of each water sample had lapsed, the bubbling was stopped, and the amount (ml) of bubbles present after the two-minute bubbling was measured.

In the case where the amount of bubbles exceeded 700 ml within 2 minutes, the bubbling of the water sample was stopped at the time when the amount of bubbles exceeded 700 ml, and the number of seconds that elapsed until the amount of bubbles exceeded 700 ml was measured (the larger the number of seconds, the greater the anti-foaming effect).

### <Defoaming Ability>

Subsequent to the foaming ability test, each water sample was left to stand for two minutes after the bubbling of the water sample was stopped, and the amount (ml) of bubbles that remained after the two-minute standing was measured.

In the case where the bubbles disappeared within the two minutes, the number of seconds that elapsed until the bubbles disappeared was measured (the smaller the number of seconds, the greater the defoaming ability).

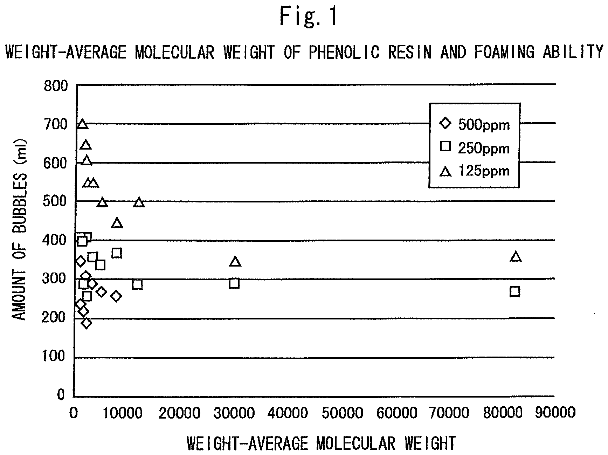

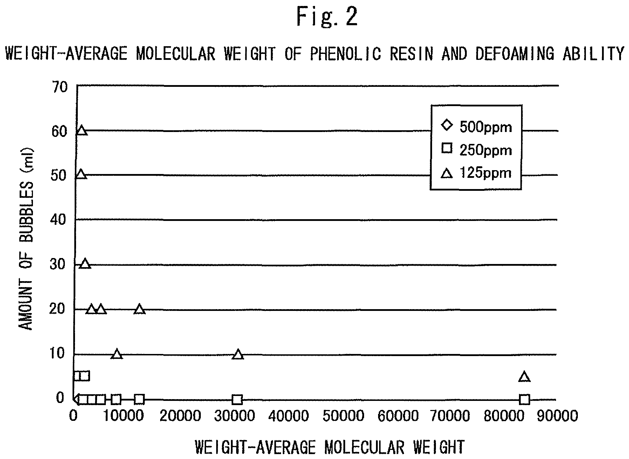

Table 2 and Figs. 1 and 2 show the results.

In Fig. 1, the smaller the amount of bubbles, the greater the advantageous effects. Similarly, in Fig. 2, the smaller the amount of bubbles, the greater the advantageous effects.

As is clear from the results illustrated in Figs. 1 and 2, the larger the weight-average molecular weight, the greater the anti-foaming effect and the defoaming ability. A significant difference was confirmed particularly when the amount of phenolic resin added to the water sample was small (125 ppm).

**[Table 2]**

| | Phenolic resin | | Foaming ability: amount of bubbles after two minutes (ml) | | | Defoaming ability: amount of bubbles after two minutes (ml) | | |
|---|---|---|---|---|---|---|---|---|
| | Name of sample | Weight-average molecular weight | | | | | | |
| | | | Parenthesized value is the number of seconds that elapsed until the amount of bubbles reached 700 ml | | | Parenthesized value is the number of seconds that elapsed until the amount of bubbles reached 0 ml | | |
| | | | 500ppm^{‡} | 250ppm^{‡} | 125ppm | 500ppm^{‡} | 250ppm^{‡} | 125ppm |
| Reference Example 1 | Sample 4 | 3,300 | 290 | 360 | 550 | 0 * * (12) | 0 * * (95) | 20 |
| Example 2 | Sample 5 | 5,000 | 270 | 340 | 500 | 0 * * (10) | 0 * * (90) | 20 |
| Example 3 | Sample 6 | 7,900 | 260 | 370 | 450 | 0 * * (10) | 0 * * (60) | 10 |
| Example 4 | Sample 7 | 12,000 | 290 | 290 | 500 | 0 * * (12) | 0 * * (13) | 20 |
| Example 5 | Sample 8 | 30,000 | 290 | 290 | 350 | 0 * * (11) | 0 * * (13) | 10 |
| Example 6 | Sample 9 | 82,704 | 270 | 270 | 360 | 0 * * (12) | 0 * * (12) | 5 |
| Comparative example 1 | Sample 1 | 1,000 | 350 | 410 | 700 * (47) | 0 * * (13) | 5 | 60 |
| Comparative example 2 | Sample 10 | 1,100 | 240 | 400 | 700 * (70) | 0 * * (12) | 5 | 50 |
| Comparative example 3 | Sample 11 | 1,800 | 220 | 290 | 650 | 0 * * (10) | 0 * * (95) | 30 |
| Comparative example 4 | Sample 2 | 2,000 | 310 | 410 | 610 | 0 * * (13) | 5 | 30 |
| Comparative example 5 | Sample 3 | 2,300 | 190 | 260 | 550 | 0 * * (9) | 0 * * (91) | 30 |

| | | | | | | | | |
|---|---|---|---|---|---|---|---|---|
| * Amount of bubbles exceeded 700 ml within two minutes * * Bubbles disappeared within two minutes $ For reference only, not encompassed by the scope of the claims | | | | | | | | |

### [Reference Example 7, Examples 8 to 9 and Comparative Examples 6 to 8]

Evaluations of the foaming ability, the defoaming ability, the turbidity of filtrate, and the coagulation effect were made using the novolac-type phenolic resin having the specific weight-average molecular weight described in Table 3A or 3B (note that, any phenolic resin was not used in Comparative Example 6) in the following manner.
(1) Into a beaker, 300 ml of tap water and 1.5 ml of a paint (water-based paint for automotive bodies: white) were charged. To the resulting liquid, an aqueous alkaline solution of the phenolic resin (the concentration of the phenolic resin: 10 mass%, the concentration of sodium hydroxide: 4.8 mass%) was added such that the concentration of the phenolic resin was 125 mg/L (note that, in Comparative Example 6, an aqueous alkaline solution that did not include a phenolic resin was used). To the liquid, 1,000 mg/L of aluminum sulfate or 100 mg/L of a cationic polymer (alkylamine-epichlorohydrin condensate (weight-average molecular weight: 500 thousand)) was further added. The resulting liquid was stirred for two minutes to form a water sample.
   In the case where aluminum sulfate was added to the water sample, the pH of the water sample was adjusted to about 7.0 by the addition of sodium hydroxide.
(2) The water sample prepared in (1) was subjected to the bubbling test as in Reference Example 1 in order to evaluate the foaming ability and the defoaming ability.
(3) The water sample prepared in (1) was filtered through a Whatman filter paper No. 41, and the turbidity of the filtrate was measured with a turbidimeter.
(4) To the water sample prepared in (1), a 1-mass% cationic polymer coagulant (copolymer of acrylamide and 2-(acryloyloxy)ethyltrimethylammonium chloride (weight-average molecular weight: 8 million)) was added such that the concentration of the cationic polymer coagulant was 6.6 mg/L in terms of the content of the active component. The state of flocs was determined and evaluated in accordance with the following criteria.

### <Coagulation Effect>

Good: Suitable flocs were formed; a remarkable coagulation property was confirmed.
Poor: Flocs were not formed; the coagulation effect was not obtained.

Tables 3A and 3B summarize the results.

**<Table 3A Results of tests in which aluminum sulfate was used in combination with phenolic resin>**

| | Name of sample | Weight-average molecular weight of phenolic resin | Foaming ability | | Defoaming ability | | Turbidity of filtrate (degree) | Coagulation effect |
|---|---|---|---|---|---|---|---|---|
| | | | Amount of bubbles after two minutes (m!) | Amount of bubbles reached 700 ml (second) | Amount of bubbles after two minutes (m!) | Amount of bubbles reached 0 ml (second) | | |
| Comparative example 6 | - | (No treatment) | - | 26 | 500 | - | 100 or more | Poor |
| Comparative example 7 | Sample 1 | 1,000 | 700 | - | 50 | - | 0.5 | Good |
| Comparative example 8 | Sample 2 | 2,000 | 350 | - | 30 | - | 0.5 | Good |
| Reference Example 7 | Sample 4 | 3,300 | 290 | - | 10 | - | 0.5 | Good |
| Example 8 | Sample 5 | 5,000 | 270 | - | 0 | 22 | 0.5 | Good |
| Example 9 | Sample 6 | 7,900 | 240 | - | 0 | 18 | 0.5 | Good |

**<Table 3B: Results of tests in which cationic polymer was used in combination with phenolic resin>**

| | Name of sample | Weight-average molecular weight of phenolic resin | Foaming ability | | Defoaming ability | | Turbidity of filtrate (degree) | Coagulation effect |
|---|---|---|---|---|---|---|---|---|
| | | | Amount of bubbles after two minutes (m!) | Amount of bubbles reached 700 ml (second) | Amount of bubbles after two minutes (m!) | Amount of bubbles reached 0 ml (second) | | |
| Comparative example 6 | - | (No treatment) | - | 26 | 500 | - | 100 or more | Poor |
| Comparative example 7 | Sample 1 | 1,000 | - | 56 | - | 54 | 3.5 | Good |
| Comparative example 8 | Sample 2 | 2,000 | - | 58 | - | 45 | 3.5 | Good |
| Reference Example 7 | Sample 4 | 3,300 | - | 73 | - | 39 | 3 | Good |
| Example 8 | Sample 5 | 5,000 | - | 73 | - | 34 | 2 | Good |
| Example 9 | Sample 6 | 7,900 | - | 83 | - | 31 | 2 | Good |

As is clear from the results shown in Tables 3A and 3B, a suitable anti-foaming effect and a suitable defoaming ability were achieved when a phenolic resin having a large weight-average molecular weight was used in both the case where aluminum sulfate was used in combination with the phenolic resin and the case where the cationic polymer was used in combination with the phenolic resin.

### [Reference Example 10, Examples 11 to 12 and Comparative Examples 9 to 11]

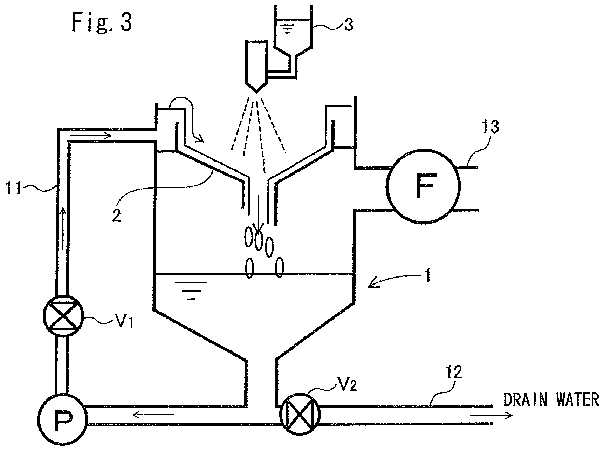

A test in which the novolac-type phenolic resin having the weight-average molecular weight shown in Table 4 was used (note that, any phenolic resin was not used in Comparative Example 9) was conducted using the testing apparatus illustrated in Fig. 3.

In the testing apparatus, water was circulated through a circulating water tank 1 having a capacity of 50 L with a pump P so as to flow downward along a water curtain plate 2 disposed above the circulating water tank, on which a paint was sprayed. In Fig. 3, Reference Numeral 3 denotes a paint-spraying apparatus, Reference Numeral 11 denotes circulation piping, Reference Numeral 12 denotes discharge piping through which the circulating water was discharged to the outside of the system, Reference Numeral 13 denotes exhaust piping, V₁ and V₂ denote a valve, and F denotes an exhaust fan.

To the circulating water, the phenolic resin shown in Table 4 was added at the specific concentration shown in Table 4. Furthermore, a cationic polymer (alkylamine-epichlorohydrin condensate (weight-average molecular weight: 500 thousand)) was added at the specific concentration shown in Table 4. Subsequently, 20 g of a paint (automotive body solvent clear) was sprayed over 4 minutes. After the operation of the apparatus was stopped, the adhesion of the treatment sludge that came to the water surface was inspected by touch and evaluated in accordance with the following criteria. The adhesion of the dried sludge was also evaluated in accordance with the same criteria.

### <Evaluation Criteria>

A: Excellent to the touch. The sludge did not adhere to a finger when rubbed.
B: Excellent to the touch. The sludge hardened when rubbed with a finger.
C: Slight adhesion was confirmed when rubbed with a finger.
D: A certain degree of adhesion remained.
E: High adhesion was confirmed.

**[Table 4]**

| | Name of sample | Weight-average molecular weight of phenolic resin | Amount of phenolic resin added (mg/l) | Amount of cationic polymer added (mg/l) | Adhesion before drying | Adhesion after drying |
|---|---|---|---|---|---|---|
| Comparative example 9 | - | - | - | - | E | E |
| Comparative example 10 | Sample 1 | 1,000 | 25 | 2.5 | D | E |
| | | | 50 | 5 | A | A |
| Comparative example 11 | Sample 2 | 2,000 | 25 | 2.5 | C | C |
| | | | 50 | 5 | A | A |
| Reference Example 10 | Sample 4 | 3,300 | 25 | 2.5 | C | C |
| | | | 50 | 5 | A | A |
| Example 11 | Sample 5 | 5,000 | 25 | 2.5 | B | B |
| | | | 50 | 5 | A | A |
| Example 12 | Sample 6 | 7,900 | 25 | 2.5 | B | B |
| | | | 50 | 5 | A | A |

As is clear from the results shown in Table 4, the larger the weight-average molecular weight of the phenolic resin, the lower the degree of adhesion achieved by the addition of a small amount (25 mg/L) of the phenolic resin.

The adhesion-reduction effect was confirmed when the weight-average molecular weight of the phenolic resin was 1,000 or more. A remarkable adhesion-reduction effect was confirmed when the weight-average molecular weight of the phenolic resin was 3,000 or more and particularly 5,000 or more.

Although the present invention has been described in detail with reference to particular embodiments, it is apparent to a person skilled in the art that various modifications can be made therein without departing from the scope of the present invention.

The present application is based on Japanese Patent Application No. 2014-180279 filed on September 4, 2014.

### Reference Signs List

- 1: CIRCULATING WATER TANK

- 2: WATER CURTAIN PLATE
- 3: PAINT-SPRAYING APPARATUS
- 21: SPRAY CHAMBER
- 22: WATER CURTAIN PLATE
- 23: ELIMINATOR
- 24: EXHAUST DUCT
- 25: WATER TANK
- 27: PIT

## Claims

1. A method for treating circulating water circulating through a wet paint booth,
the method comprising coagulating the water-based paint and/or a solvent-based paint included in the circulating water by adding an agent to the circulating water,
wherein said agent comprises a phenolic resin having a weight-average molecular weight of 5,000 to 100,000, the phenolic resin serving as an active component,
wherein the molecular weight is measured as set out in the description,
wherein the phenolic resin is dissolved in an aqueous alkaline solution,
wherein the phenolic resin is at least one selected from the group consisting of a novolac-type phenolic resin and a secondary-reaction phenolic resin,
wherein said secondary reaction phenolic resin is produced by adding an aldehyde to an aqueous alkaline solution of a novolac-type phenolic resin produced by a reaction of a phenol with an aldehyde in the presence of an acid catalyst and subsequently conducting a resole-type secondary reaction in the presence of an alkali catalyst,
wherein said agent is added to the circulating water such that an amount of the phenolic resin is 1 to 200 mg/L,
wherein an aluminum-based coagulant and/or a cationic polymer is further added to the circulating water,
wherein the phenolic resin when added to water circulating through a wet paint booth dissolves in the circulating water or disperses in the circulating water to form colloidal particles, and
wherein the dissolved or dispersed phenolic resin particles are coagulated and insolubilized due to the contribution of the cationic polymer and the aluminum-based coagulant that are included in the circulating water together with the phenolic resin.

2. The method for treating circulating water circulating through a wet paint booth according to Claim 1, wherein the aluminum-based coagulant is added to the circulating water such that an amount of the aluminum-based coagulant is 1 to 200 mg/L in terms of the content of the active component, and/or an amount of the cationic polymer is 5 to 50 mg/L in terms of the content of the active component.

3. The method for treating circulating water circulating through a wet paint booth according to Claim 1 or 2, the method further comprising performing a coagulation treatment by adding a polymer coagulant to the circulating water subsequent to the addition of the agent.

4. The method for treating circulating water circulating through a wet paint booth according to any one of the Claims 1 to 3, wherein an amount of the phenolic resin added to the circulating water is 0.1% by mass or more of a solid content of the water-based paint and/or the solvent-based paint included in the circulating water in terms of a content of the active component.

5. The method for treating circulating water circulating through a wet paint booth according to any one of the Claims 1 to 4, wherein the phenolic resin has a weight-average molecular weight of 5,000 to 30,000.

6. The method for treating circulating water circulating through a wet paint booth according to any one of the Claims 1 to 5, wherein the aluminum-based coagulant is one selected from the group consisting of aluminum sulfate, polyaluminum chloride, and aluminum nitrate.

7. The method for treating circulating water circulating through a wet paint booth according to any one of the preceding claims,
wherein the cationic polymer has a weight-average molecular weight of 1,000 to 1 million,
wherein the molecular weight is measured as set out in the description, and
wherein the cationic polymer is selected from alkylamine-epichlorohydrin condensate, polyethyleneimine, alkylene dichloride-polyalkylene polyamine condensate, dicyandiamide-formaldehyde condensate, a homopolymer of the cationic monomer dimethylaminoethyl methacrylate (DAM) or the cationic monomer diallyldimethylammonium chloride (DADMAC), and a copolymer of a cationic monomer selected from DAM or DADMAC with the nonionic monomer acrylamide.

8. The method for treating circulating water circulating through a wet paint booth according to any one of the Claims 1 to 6, wherein a concentration of an alkali in the aqueous alkaline solution is 1% to 25% by mass, and
a concentration of the phenolic resin in the aqueous alkaline solution is 1% to 50% by mass.

## Patentansprüche

1. Verfahren zur Behandlung von zirkulierendem Wasser, das durch eine Nasslackierkabine zirkuliert,
wobei das Verfahren das Koagulieren des Wasserlacks und/oder eines Lösungsmittellacks, der in dem zirkulierenden Wasser enthalten ist, durch Zugabe eines Mittels zu dem zirkulierenden Wasser umfasst,
wobei das Mittel ein Phenolharz mit einem gewichtsmittleren Molekulargewicht von 5.000 bis 100.000 umfasst, wobei das Phenolharz als aktive Komponente dient,
wobei das Molekulargewicht wie in der Beschreibung dargelegt gemessen wird,
wobei das Phenolharz in einer wässrigen alkalischen Lösung gelöst wird,
wobei das Phenolharz mindestens eines, ausgewählt aus der Gruppe, bestehend aus einem Phenolharz vom Novolaktyp und einem Sekundärreaktionsphenolharz, ist,
wobei das Sekundärreaktionsphenolharz durch Zugabe eines Aldehyds zu einer wässrigen alkalischen Lösung eines Phenolharzes vom Novolaktyp, das durch eine Reaktion eines Phenols mit einem Aldehyd in Gegenwart eines Säurekatalysators hergestellt wird, und anschließendes Durchführen einer Sekundärreaktion vom Resoltyp in Gegenwart eines Alkalikatalysators hergestellt wird,
wobei das Mittel derart zu dem zirkulierenden Wasser hinzugegeben wird, dass eine Menge des Phenolharzes 1 bis 200 mg/L beträgt,
wobei ein Koagulationsmittel auf Aluminiumbasis und/oder ein kationisches Polymer ferner zu dem zirkulierenden Wasser hinzugegeben wird,
wobei das Phenolharz, wenn es dem durch eine Nasslackierkabine zirkulierenden Wasser hinzugegeben wird, sich in dem zirkulierenden Wasser löst oder in dem zirkulierenden Wasser dispergiert, um Kolloidpartikel zu bilden, und
wobei die gelösten oder dispergierten Phenolharzpartikel aufgrund des Beitrags des kationischen Polymers und des Koagulationsmittels auf Aluminiumbasis, die zusammen mit dem Phenolharz in dem zirkulierenden Wasser enthalten sind, koaguliert und insolubilisiert werden.

2. Verfahren zur Behandlung von zirkulierendem Wasser, das durch eine Nasslackierkabine zirkuliert, gemäß Anspruch 1, wobei das Koagulationsmittel auf Aluminiumbasis dem zirkulierenden Wasser derart hinzugegeben wird, dass eine Menge des Koagulationsmittels auf Aluminiumbasis 1 bis 200 mg/L, bezogen auf den Gehalt der aktiven Komponente, beträgt und/oder eine Meng des kationischen Polymers 5 bis 50 mg/L, bezogen auf den Gehalt der aktiven Komponente, beträgt.

3. Verfahren zur Behandlung von zirkulierendem Wasser, das durch eine Nasslackierkabine zirkuliert, gemäß Anspruch 1 oder 2, wobei das Verfahren ferner die Durchführung einer Koagulationsbehandlung durch Zugabe eines Polymerkoagulationsmittels zu dem zirkulierenden Wasser im Anschluss an die Zugabe des Mittels umfasst.

4. Verfahren zur Behandlung von zirkulierendem Wasser, das durch eine Nasslackierkabine zirkuliert, gemäß einem der Ansprüche 1 bis 3, wobei eine Menge des dem zirkulierenden Wasser hinzugegebenen Phenolharzes 0,1 Masse-% oder mehr eines Feststoffgehalts des Wasserlacks und/oder des Lösungsmittellacks, der in dem zirkulierenden Wasser enthalten ist, bezogen auf einen Gehalt der aktiven Komponente, beträgt.

5. Verfahren zur Behandlung von zirkulierendem Wasser, das durch eine Nasslackierkabine zirkuliert, gemäß einem der Ansprüche 1 bis 4, wobei das Phenolharz ein gewichtsmittleres Molekulargewicht von 5.000 bis 30.000 aufweist.

6. Verfahren zur Behandlung von zirkulierendem Wasser, das durch eine Nasslackierkabine zirkuliert, gemäß einem der Ansprüche 1 bis 5, wobei das Koagulationsmittel auf Aluminiumbasis eines, ausgewählt aus der Gruppe, bestehend aus Aluminiumsulfat, Polyaluminiumchlorid und Aluminiumnitrat, ist.

7. Verfahren zur Behandlung von zirkulierendem Wasser, das durch eine Nasslackierkabine zirkuliert, gemäß einem der vorhergehenden Ansprüche,
wobei das kationische Polymer ein gewichtsmittleres Molekulargewicht von 1.000 bis 1 Million aufweist,
wobei das Molekulargewicht wie in der Beschreibung dargelegt gemessen wird und
wobei das kationische Polymer aus Alkylamin-Epichlorhydrin-Kondensat, Polyethylenimin, Alkylendichlorid-Polyalkylenpolyamin-Kondensat, Dicyandiamid-Formaldehyd-Kondensat, einem Homopolymer des kationischen Monomers Dimethylaminoethylmethacrylat (DAM) oder des kationischen Monomers Diallyldimethylammoniumchlorid (DADMAC) und einem Copolymer eines kationischen Monomers, ausgewählt aus DAM oder DADMAC, mit dem nichtionischen Monomer Acrylamid, ausgewählt ist.

8. Verfahren zur Behandlung von zirkulierendem Wasser, das durch eine Nasslackierkabine zirkuliert, gemäß einem der Ansprüche 1 bis 6, wobei eine Konzentration eines Alkalis in der wässrigen alkalischen Lösung 1 bis 25 Masse-% beträgt und
eine Konzentration des Phenolharzes in der wässrigen alkalischen Lösung 1 bis 50 Masse-% beträgt.

## Revendications

1. Procédé de traitement d'eau en circulation circulant à travers une cabine de peinture humide,
le procédé comprenant la coagulation de la peinture à base d'eau et/ou d'une peinture à base de solvant incluses dans l'eau en circulation par l'ajout d'un agent à l'eau en circulation,
dans lequel ledit agent comprend une résine phénolique présentant un poids moléculaire moyen en poids allant de 5 000 à 100 000, la résine phénolique servant de composant actif,
dans lequel le poids moléculaire est mesuré comme indiqué dans la description,
dans lequel la résine phénolique est dissoute dans une solution alcaline aqueuse,
dans lequel la résine phénolique est au moins une résine sélectionnée dans le groupe consistant en une résine phénolique de type novolaque et une résine phénolique de réaction secondaire,
dans lequel ladite résine phénolique de réaction secondaire est produite par l'ajout d'un aldéhyde à une solution alcaline aqueuse d'une résine phénolique de type novolaque produite par une réaction d'un phénol avec un aldéhyde en présence d'un catalyseur acide et par la suite par la réalisation d'une réaction secondaire de type résol en présence d'un catalyseur alcalin,
dans lequel ledit agent est ajouté à l'eau en circulation de telle sorte qu'une quantité de résine phénolique va de 1 à 200 mg/l,
dans lequel un coagulant à base d'aluminium et/ou un polymère cationique est en outre ajouté à l'eau en circulation,
dans lequel la résine phénolique, lorsqu'elle est ajoutée à de l'eau circulant à travers une cabine de peinture humide, se dissout dans l'eau en circulation ou se disperse dans l'eau en circulation pour former des particules colloïdales, et
dans lequel les particules de résine phénolique dissoutes ou dispersées sont coagulées et insolubilisées en raison de la contribution du polymère cationique et du coagulant à base d'aluminium qui sont inclus dans l'eau en circulation avec la résine phénolique.

2. Procédé de traitement d'eau en circulation circulant à travers une cabine de peinture humide selon la revendication 1, dans lequel le coagulant à base d'aluminium est ajouté à l'eau en circulation de telle sorte qu'une quantité du coagulant à base d'aluminium est de 1 à 200 mg/l en termes de teneur en composant actif, et/ou une quantité du polymère cationique est de 5 à 50 mg/l en termes de teneur en composant actif.

3. Procédé de traitement d'eau en circulation circulant à travers une cabine de peinture humide selon la revendication 1 ou la revendication 2, le procédé comprenant en outre la réalisation d'un traitement de coagulation par l'ajout d'un coagulant polymère à l'eau en circulation après l'ajout de l'agent.

4. Procédé de traitement d'eau en circulation circulant à travers une cabine de peinture humide selon l'une quelconque des revendications 1 à 3, dans lequel une quantité de résine phénolique ajoutée à l'eau en circulation est de 0,1 % en masse ou plus d'une teneur en solides de la peinture à base d'eau et/ou de la peinture à base de solvant incluse dans l'eau en circulation en termes de teneur en composant actif.

5. Procédé de traitement d'eau en circulation circulant à travers une cabine de peinture humide selon l'une quelconque des revendications 1 à 4, dans lequel la résine phénolique présente un poids moléculaire moyen en poids de 5 000 à 30 000.

6. Procédé de traitement d'eau en circulation circulant à travers une cabine de peinture humide selon l'une quelconque des revendications 1 à 5, dans lequel le coagulant à base d'aluminium est un sélectionné dans le groupe consistant en le sulfate d'aluminium, le polychlorure d'aluminium et le nitrate d'aluminium.

7. Procédé de traitement d'eau en circulation circulant à travers une cabine de peinture humide selon l'une quelconque des revendications précédentes,
dans lequel le polymère cationique présente un poids moléculaire moyen en poids de 1 000 à 1 million,
dans lequel le poids moléculaire est mesuré comme indiqué dans la description, et
dans lequel le polymère cationique est sélectionné parmi un condensat d'alkylamine-épichlorhydrine, une polyéthylèneimine, un condensat de dichlorure d'alkylène-polyalkylène polyamine, un condensat de dicyandiamide-formaldéhyde, un homopolymère du monomère cationique méthacrylate de diméthylaminoéthyle (DAM) ou du monomère cationique chlorure de diallyldiméthylammonium (DADMAC), et un copolymère d'un monomère cationique sélectionné parmi DAM ou DADMAC avec le monomère non ionique acrylamide.

8. Procédé de traitement d'eau en circulation circulant à travers une cabine de peinture humide selon l'une quelconque des revendications 1 à 6, dans lequel la concentration d'un alcalin dans la solution alcaline aqueuse est de 1 % à 25 % en masse, et
la concentration de la résine phénolique dans la solution alcaline aqueuse est de 1 % à 50 % en masse.
